# EUROPEAN PATENT APPLICATION

(11) **EP 4 579 827 A1**
(43) Date of publication of application: **02.07.2025**
(21) Application number: 24221887.3
(22) Date of filing: 19.12.2024
(51) Int. Cl.: H01M 8/04089, H01M 8/043, H01M 8/04537, H01M 8/04701, H01M 8/04746, H01M 8/04858, B60L 58/32

(54) **FUEL CELL SYSTEM AND METHODS FOR OPERATING A FUEL CELL SYSTEM**

(30) Priority: 29.12.2023 SE 2351528
(71) Applicant: Volvo Truck Corporation, 405 08 Göteborg (SE)
(72) Inventor: HINDI, Gustavo, 449 50 Alafors (SE); BLOMGREN, Fredrik, 425 35 Kärra (SE)
(74) Representative: Valea AB

(57) **Abstract**

A system and method for controlling operation of a fuel cell system comprising a fuel cell unit that comprises a fuel cell stack comprising a cathode and an anode, and a cathode recirculation passage configured to divert a cathode exhaust flow to a cathode inlet line. A control system is configured to, responsive to a value of a power output that is requested from the fuel cell system being below a first threshold power level, control a target coolant inlet temperature of a coolant at a coolant inlet of the fuel cell stack and control an air pressure at the cathode. Responsive to the value of a power output being below at least one second threshold power level, additionally, an oxygen partial pressure in the air flow may be reduced by controlling a volume flow rate of a cathode exhaust flow that is directed to the cathode inlet line.

## Description

### TECHNICAL FIELD

The disclosure relates generally to operating a fuel cell system when a power output requested from the fuel cell system is reduced.

The disclosure can be applied in heavy-duty vehicles, such as trucks, buses, and construction equipment, as well as in gensets.

### BACKGROUND

A fuel cell is an electrochemical device that includes an electrolyte sandwiched between two electrodes such as an anode and a cathode. Solid polymer electrolyte fuel cells, which employ a proton exchange membrane (PEM) generate electric power or energy via electrochemical reaction between fuel, such as hydrogen gas received at the anode or anode side, and oxidant, such as oxygen or air received at the cathode or cathode side. PEM fuel cells are considered well suitable for vehicular applications as well as for stationary applications employing fuel cell systems. Two or more fuel cells are usually arranged together into a fuel cell stack, in order to provide a higher output voltage. One or more fuel cell stacks may form a fuel cell unit, and a fuel cell system may include one or more fuel cell units.

In fuel cells, metals such as e.g. palladium and platinum, are used as catalysts to promote the electrochemical reaction between the hydrogen gas and the oxidizing gas, wherein the reaction occurs across the membrane or electrolyte. A supporting structure made of a catalyst support material, such as carbon, is configured to support the membrane, and the metal catalysts are typically used on the catalyst support material. The condition of the catalysts and the support material defines durability, lifetime, and performance of the fuel cell system. The catalysts need to operate within certain conditions to result in effective reaction rates. Thus, an excessive increase in a single cell voltage may lead to degradation of the catalysts and support material, wherein the single cell voltage can be defined as a cell voltage or potential of each fuel cell of each fuel cell stack in a fuel cell system. Accordingly, during operation of the fuel cell system, it is desirable to maintain the single cell voltage below a certain voltage level.

In fuel cell systems with higher power, which are gaining increasing attention in automotive and other areas, there is an issue that arises at low loads on a fuel cell system. In particular, the single cell potential can reach a safe threshold at a higher power of the fuel cell system. Thus, excess power may be generated which is wasted whereby efficiency of the fuel cell system decreases. Moreover, as the power of the fuel cell system decreases, the single cell potential increases to values that negatively affect the condition of the catalysts and the carbon support material. Accordingly, it may be challenging to control the fuel cell system at lower loads in a manner that takes into consideration potential degradation of the catalysts and the support material.

Various methods have been proposed for reducing a single cell potential at decreased power demands from the fuel cell system when current densities in the fuel cell system decrease. However, there remains a need for improved methods for controlling operation of the fuel cell system at decreased power demands on the fuel cell system.

### SUMMARY

Aspects of the present disclosure relate to control of a fuel cell system at low loads when power demand on the fuel cell system decreases, in a manner that limits the single cell voltage or potential to values lower than 0.8V. This allows avoiding degradation of the catalysts and support material. The fuel cell system may be deployed in a fuel cell vehicle or in a stationary application.

In an aspect, a fuel cell system is provided that comprises a fuel cell unit that comprises a fuel cell stack comprising a cathode and an anode, the cathode being configured to receive an air flow via a cathode inlet line and to provide a cathode exhaust flow via a cathode outlet line. The fuel cell system also comprises a cathode recirculation passage, a coolant system, and a control system. The cathode recirculation passage and the coolant system may part of the fuel cell unit. The cathode recirculation passage fluidly connects the cathode outlet line to the cathode inlet line to thereby divert the cathode exhaust flow to the cathode inlet line, such that the cathode exhaust flow is mixed with the air flow received by the cathode inlet line. The coolant system is configured to circulate a coolant through the fuel cell stack, the coolant system comprising a coolant inlet line configured to direct the coolant to the fuel cell stack and a coolant outlet line configured to direct the coolant away from the fuel cell stack after the coolant has passed through the fuel cell stack. The control system comprises processing circuitry that is configured to obtain a value of power output that is requested from the fuel cell system; and, responsive to the value of the power output being below a first threshold power level, monitor a voltage of the fuel cell stack and control a target coolant inlet temperature of the coolant at the coolant inlet to thereby maintain the voltage of the fuel cell stack to remain below 0.8V.

The voltage of the fuel cell stack may be a single cell voltage that is determined for the fuel cell stack. In some examples, the single cell voltage may be determined as a measured voltage of the fuel cell stack divided by a number of fuel cells in the fuel cell stack. Thus, the single cell voltage may be determined as an average single cell voltage and it represents a voltage of each fuel cell in each fuel cell stack. In some examples, the single cell voltage may be determined from a measured voltage of the entire fuel cell unit, in which case this measured voltage is divided by the number of stacks and the number of cells in each stack. In some examples, a voltage of each fuel cell is measured and an average value of these measured voltages may be taken as the single cell voltage of the fuel cell stack.

The processing circuitry of the control system may be configured to control the target coolant inlet temperature by increasing the target coolant inlet temperature to a temperature threshold level.

The technical benefits include controlling the fuel cell system in a manner that allows reducing the power demand or load on the fuel cell system as required, while avoiding a risk that a single cell potential increases to values that are above the safety threshold of 0.8V. The efficiency of the fuel cell system is intentionally decreased by increasing, via increasing the target coolant inlet temperature, the temperature of the fuel cell stack. The fuel cell stack may thus require a lesser reduction in an oxygen partial pressure in the air flow fed to the cathode, in order to operate without the single cell voltage increasing to values above 0.8V. Accordingly, the system of the present disclosure provides an improved control of the fuel cell system at low power demands, in the manner that avoids causing degradation of the catalysts and the support material of the fuel cell stack.

The processing circuitry of the control system may be configured to control an air pressure at the cathode of the fuel cell stack as the target coolant inlet temperature is controlled and/or adjusted. In some examples, as the target coolant inlet temperature is increased, in order to prevent the membrane from dehydration, the air pressure at the cathode is increased also so that a cathode inlet air relative humidity (RH) can be maintained at acceptable levels.

In some examples, the temperature threshold level is 80 °C. In some examples, the temperature threshold level may be 81 °C or 82 °C or 83 °C or 84 °C.

In some examples, the processing circuitry of the control system may be configured to, responsive to the value of the power output being below at least one second threshold power level that is smaller than the first threshold power level, when the target coolant inlet temperature is at the temperature threshold, control the cathode recirculation passage to direct a portion of the cathode exhaust flow to be mixed with the air flow to thereby reduce an oxygen partial pressure of the air flow.

In some examples, the processing circuitry of the control system is configured to control, in dependance on the value of the power output, at least one flow control valve fluidly connected to the cathode recirculation passage and a cathode recirculation pump fluidly connected to the cathode recirculation passage and that is configured to operate to drive the cathode exhaust flow through the cathode recirculation passage.

In some examples, the fuel cell unit comprises one fuel cell unit. Thus, the fuel cell system comprises a single fuel cell unit.

In some examples, the obtained value of the power output is a predicted value of the power output of the fuel cell system.

In an aspect, a fuel cell vehicle is provided that comprises a fuel cell system in accordance with examples of the present disclosure.

In an aspect, a method for operating a fuel cell system is provided, the fuel cell system comprising a fuel cell unit that comprises a fuel cell stack comprising a cathode and an anode, the cathode being configured to receive an air flow via a cathode inlet line and to provide a cathode exhaust flow via a cathode outlet line. The method comprises obtaining a value of power output that is requested from the fuel cell system; responsive to the value of the power output being below a first threshold power level, monitoring a voltage of the fuel cell stack, and controlling a target coolant inlet temperature of a coolant at a coolant inlet of the fuel cell stack to thereby maintain the voltage of the fuel cell stack to remain below 0.8V. The method also comprises, responsive to the value of the power output being below at least one second threshold power level that is smaller than the first threshold power level, controlling the target coolant inlet temperature and controlling an oxygen partial pressure of the air flow, wherein the oxygen partial pressure is controlled by controlling a volume flow rate of the cathode exhaust flow that is directed from the cathode outlet line to the cathode inlet line to be mixed with the air flow.

The technical benefits of the method comprise similar benefits to those described above in connection with the fuel cell system. Accordingly, the method of the present disclosure provides an improved control of the fuel cell system at low power demands, in the manner that avoids causing degradation of the catalysts and the support material of the fuel cell stack of the fuel cell system.

A lower value of the power output requires a lower oxygen partial pressure of the air flow.

In some examples, the method comprises controlling the target coolant inlet temperature by increasing the target coolant inlet temperature to a temperature threshold level. In some examples, the temperature threshold level is 80 °C.

In some examples, the method comprises controlling an air pressure at the cathode of the fuel cell stack as the target coolant inlet temperature is controlled.

In some examples, controlling the oxygen partial pressure of the air flow comprises controlling at least one flow control valve and a cathode recirculation pump fluidly connected to a cathode recirculation passage that fluidly connects the cathode outlet line to the cathode inlet line to thereby divert the cathode exhaust flow to the cathode inlet line such that the cathode exhaust flow is mixed with the air flow, wherein the at least one flow control valve and the cathode recirculation pump are controlled in dependance on the value of the power output. For example, the at least one flow control valve may comprise a first flow control valve positioned at a coupling between the coolant outlet line and the cathode recirculation passage and a second flow control valve positioned at a coupling between the cathode recirculation passage and the coolant inlet line. The valves may be activated or actuated to be at least partially open to allow a portion of the cathode exhaust flow in the coolant outlet line to be circulated through the cathode recirculation passage and to the cathode inlet line, whereby the portion of the cathode exhaust flow is mixed with the air flow supplied to the cathode inlet.

In some examples, the obtained value of the power output is a predicted value of the power output of the fuel cell system.

In an aspect, a control system for controlling a fuel cell system of a fuel cell vehicle is provided. The control system comprises processing circuitry configured to perform the method in accordance with examples of the present disclosure.

In an aspect, a fuel cell vehicle is provided that comprises the control system and/or that is in communication with the control system in accordance with examples of the present disclosure.

In an aspect, a computer program product is provided that comprises computer-executable instructions, which, when executed by processing circuitry, cause the processing circuitry to perform the method in accordance with any aspects and examples of the present disclosure.

In an aspect, a computer-readable storage medium is provided that has stored thereon a computer program product comprising computer-executable instructions which, when executed by processing circuitry, cause the processing circuitry to perform the method in accordance with any aspects and examples of the present disclosure.

Additional features and advantages are disclosed in the following description, claims, and drawings. Furthermore, additional advantages will be readily apparent from the present disclosure to those skilled in the art or recognized by practicing the disclosure as described herein. There are also disclosed herein control units, computer program products, and computer-readable media associated with the above discussed technical effects and corresponding advantages.

### BRIEF DESCRIPTION OF THE DRAWINGS

With reference to the appended drawings, below follows a more detailed description of aspects of the disclosure cited as examples.
**FIG. 1** illustrates a side view of an example of a vehicle comprising a fuel cell system in which a method in accordance with examples of the present disclosure may be implemented.
**FIG. 2** is a block diagram illustrating a fuel cell system and a control system of the vehicle of FIG. 1, in accordance with an example.
**FIG. 3** is a diagram illustrating an example of a fuel cell system in which a method in accordance with examples of the present disclosure may be implemented.
**FIG. 4** is a diagram illustrating another example of a fuel cell system in which a method in accordance with examples of the present disclosure may be implemented.
**FIG. 5** is a diagram illustrating another example of a fuel cell system in which a method in accordance with examples the present disclosure may be implemented.
**FIG. 6A** is a flowchart illustrating a method for operating a fuel cell system, in accordance with an example.
**FIG. 6B** is a flowchart illustrating a method for operating a fuel cell system, in accordance with an example.
**FIGs. 7A** and **7B** are schematic block diagrams illustrating examples of a control system of a fuel cell system, in accordance with an example.

### DETAILED DESCRIPTION

A fuel cell system capable of generating high or higher power may include a single fuel cell unit that comprises one or more fuel cell stacks. The single fuel cell unit may be desirable in various applications, e.g., in fuel cell vehicles, for several reasons, including e.g. space saving considerations, more straightforward maintenance, and simplified control strategies. At the same time, in such fuel cell systems with an improved efficiency, at low loads, a single cell voltage may reach a safety threshold at higher power levels, e.g., already at 50 kilowatt (kW) in some cases. Thus, in some cases, once the fuel cell system enters an idle mode or state at low loads i.e. low current densities, the single cell voltage may reach the safety threshold quickly. This makes it challenging to properly operate the fuel cell system at low loads without a risk of damaging catalysts and support material of fuel cell stacks. Moreover, the higher idle power is wasted which decreases efficiency of the fuel cell system.

Accordingly, to control catalyst degradation and thereby extend a fuel cell system lifetime, it is desirable to limit a maximum value that the single cell voltage may reach at low current densities of the fuel cell system. When the single cell voltage, also interchangeably referred to as single cell potential, increases to values of or above 0.8V, platinum dissolution starts to occur thereby reducing an electrochemical surface area (ECSA), which in turn leads to reduction of efficiency and lifetime of the fuel cell system. Thus, if the maximum value that the single cell voltage is allowed to reach is set to 0.8V or just below 0.8 e.g. 0.79V, a risk of degradation of the catalysts and the support material may be reduced or avoided.

Solutions have been proposed which involve a stop/start strategy such that a fuel cell system may be shut down when a single cell voltage reaches 0.8V. For example, when a power demanded from the fuel cell system falls below a certain value, e.g. 50kW in some scenarios, the fuel cell system may be shut down. A drawback of such approaches is that frequent stops and starts of the fuel cell system induce degradation mechanisms such as carbon corrosion in the catalyst support material. Thus leads to reduction of the platinum and thus the reduction of the ECSA, which causes a structure of the catalyst to collapse, and thus increases mass transport losses. Thus, stop/start strategies may negatively impact efficiency and lifetime of the fuel cell system.

The methods and systems in accordance with the present disclosure employ a control strategy which involves the use of a cathode recirculation loop or passage which recirculates a cathode exhaust flow back into an inlet of the cathode, in order to reduce an oxygen partial pressure of an air flow fed to the cathode inlet. The control strategy also uses an active control of a target inlet coolant temperature of a coolant flow in the coolant system, wherein the target inlet coolant temperature is controlled as a function of power demanded from the fuel cell system by an application e.g., by a vehicle. Actual inlet and outlet coolant temperatures are monitored. A controller or control system, configured to control operation of the fuel cell system, is configured and adapted to control the target inlet coolant temperature and to regulate a volume flow rate of the cathode exhaust flow that is diverted or recirculated into the air flow to adjust an oxygen partial pressure of the air flow. In addition, a cathode pressure level is controlled. The control system performs the control of the target inlet coolant temperature and the volume flow rate of the recirculated cathode exhaust flow while monitoring a single cell voltage of the fuel cell system, whereby the single cell voltage is controlled not to exceed a safety threshold e.g. 0.8V.

Thus, in situations when a power demand from the fuel cell system decreases such that the fuel cell system operates at low loads or, interchangeably, at low current densities, a controller may start monitoring a voltage of each of fuel cell stacks of the fuel cell system, to estimate a single cell voltage. The controller may control a coolant system to increase a target inlet coolant temperature once the power demand falls below a certain threshold power level. If whether reduction in the power demand takes place, the controller may both control the target inlet coolant temperature to increase and to control a cathode recirculation passage to direct a portion of a cathode exhaust flow to be mixed with the air flow to thereby reduce an oxygen partial pressure of the air flow. A volume flow rate of the cathode exhaust flow in the cathode recirculation passage may be controlled by controlling e.g. a recirculation pump and one or more flow rate valves in the cathode recirculation passage.

Although an approach where only a cathode exhaust flow is diverted to be mixed with the air flow fed to the cathode, e.g. from the outside, may potentially cause oxygen starvation in the stack due to sharp reduction in the oxygen partial pressure, the combination of this technique with the increase in the target inlet coolant temperature alters the fuel cell stack efficiency. Thus, because the efficiency of the fuel cell stack reduces, a lesser reduction in the oxygen partial pressure in the air flow will be required to reach the lower power required from the fuel cell system. In this way, the lower power may be achieved without a risk of the single cell potential increasing to above the safety threshold of 0.8V. Accordingly, the systems and methods of the present disclosure advantageously provide an improved control of the fuel cell system at low power demands, in the manner that avoids causing degradation of the catalysts and the support material.

In some examples, the processing circuitry of the control system may be configured to control an air pressure at a cathode of the fuel cell stack as the value of the target coolant inlet temperature is adjusted. For example, the air pressure at the cathode, or a cathode air pressure, may be increased as the target coolant inlet temperature is increased.

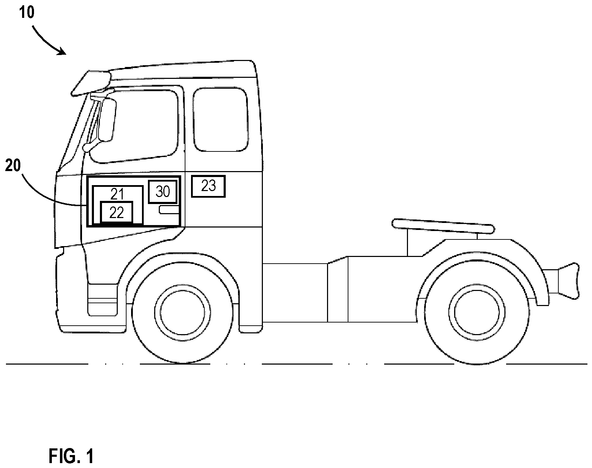

**FIG. 1** depicts a side view of a vehicle 10 according to an example of the present disclosure. The vehicle 10 is shown as a truck, such as a heavy-duty truck for towing one or more trailers (not shown). The vehicle 10 may be a fuel cell electric vehicle (FCEV) or a hybrid vehicle. It should be appreciated that the present disclosure is not limited to any other specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles, including stationary applications.

As shown schematically in FIG. 1, the vehicle 10 comprises a fuel cell system 20 comprising a fuel cell unit 21 that comprises one or more fuel cell stacks 22. The fuel cell system 20 may be used for powering one or more electric drive motors (not shown) which are used for creating a propulsion force to the vehicle 10. The fuel cell system 20 may additionally or alternatively be used for powering other electric power consumers (not shown) of the vehicle 10, such as an electric motor for a crane, an electric motor for a refrigerator system, an electric motor for an air conditioning system, or any other electric power consuming function of the vehicle 10. The fuel cell system 20 may thus additionally or alternatively be used for powering a power take-off (PTO) device that is a device that transfers an electric motor's power to another piece of equipment. The vehicle 10 may include or be coupled to or associated with one or more PTO devices.

The fuel cell unit 21 of the fuel cell system 20 comprises one or more fuel cell stacks, shown as a fuel cell stack 22 in FIG. 1, each comprising two or more fuel cells. In examples herein, the fuel cell unit 21 may comprise multiple fuel cell stacks 22, and any mention of the fuel cell stack 22 applies to two or more fuel cell stacks. The fuel cell unit 21 is arranged to provide the fuel cells with necessary supply of hydrogen fuel (H₂), oxidant such as air, cooling, heating, etc. The fuel cell system 20 may include various components which are not shown in FIG. 1. In some examples, the fuel cell system 20 may comprise more than one fuel cell unit 21, and each fuel cell unit may comprise its own controller system, which may be communicatively connected to a controller or control unit or control system for the entire fuel cell system 20.

The fuel cell system 20 may comprise a single fuel cell system, two fuel cell systems, or more than two fuel cell systems, such as three or more fuel cell systems. Furthermore, when several fuel cell units or systems are provided, the fuel cell systems may be either independently controllable or commonly controllable. When independently controllable, each fuel cell system may be controlled to an on-state or an off-state regardless of the state(s) of the other fuel cell system(s). When two or more of the fuel cell systems are commonly controllable, those fuel cell systems are controllable in common to an on-state or an off-state, i.e., all fuel cell systems are controlled in common to the same state. Two fuel cell systems may in some cases be controlled in dependence on one another, such that one of the fuel cell systems is controlled to an on-state or an off-state in dependence on the state of the other fuel cell system(s).

The vehicle 10 further comprises a control device or control system 30 according to an example of the present disclosure. The control system 30 is configured to control operation of the fuel cell system 20. In some examples, the control system 30 may be implemented as a combination of an on-board and off-board control system or systems. The control system 30 may be configured to control the fuel cell system 20 and the one or more fuel cell units 21 by issuing control signals and by receiving status information relating to the fuel cell system 20. The control system 30 may be configured to receive information from various sensors, including one or more of temperature sensors, moisture sensors, voltage sensors, and other sensors included in or associated with the fuel cell system 20 and/or the vehicle 10. For example, one or more temperature sensors may be positioned such that they can acquire measurements of a temperature of a coolant system and other components of the fuel cell system 20. One or more voltage sensors may be included in a fuel cell unit to monitor voltage of the fuel cell stacks. Various sensors may acquire measurements regarding operation of components of the fuel cell system 20. For example, one or more temperature sensors may measure an inlet coolant temperature and an outlet coolant temperature of the coolant system of the fuel cell unit 21.

The control system 30 may also be communicatively coupled to an internal database, an external database, or a combination thereof, to receive data related to a route traveled or to be traveled by the vehicle. The data related to the route may include a start point, an end point, and a path traveled by the vehicle 10 between the start and end points. The control system 30 may store and/or may have access to data related to the route including terrain information, speed limits, obstacles, etc. The control system 30 may also receive real-time, or close-to-real-time, information on the route including a traffic congestion, accident reports, road closures, construction, etc. The control system 30 may also store and/or may have access to historical data related to driver's driving pattern, historical data on the vehicle operation e.g. locations traveled by the vehicle, frequency and locations of stops, historical data on ambient conditions at the locations traveled by the vehicle, etc. The control system 30 may further receive data from a weather service which may include data on predicted weather conditions, and other types of data. The control system 30 may have data on a vehicle current location and predicted locations that the vehicle is expected to travel along the route.

The control system 30 is an electronic control unit and may comprise processing circuitry which is adapted to execute a computer program such as computer-executable instructions to perform a method according to aspects of the present disclosure. The control system 30 may comprise hardware and/or software for performing the method according to aspects of the present disclosure. The control system 30 may be denoted a computer. The control system 30 may be constituted by one or more separate sub-units, and the control system 30 may communicate by use of wired and/or wireless communication technology.

As shown in FIG. 1, the vehicle 10 comprises an energy storage system (ESS) 23 such as e.g. one or more batteries and/or one or more supercapacitors for storing electric energy, including excess electric energy produced by the fuel cell system 20. The ESS 23 may store energy regenerated during braking such as regenerative braking, and/or it may be configured for being charged by a charger, such as, e.g., from an external power grid. The ESS 23 is configured to assist the fuel cell system 20 in supplying energy to a drive motor, to meet power/energy demands of the vehicle 10. The ESS 23 may be configured to provide additional power in situations when the complete required power cannot be provided by fuel cell system 20, or when it is not suitable to provide the complete required power by the fuel cell system 20. The ESS 23 may provide electrical energy storage for electrical energy that is generated from the fuel cell system at low loads, assist the fuel cell system 20 with generating power at higher loads, or may serve as a main energy supplier in some circumstances. The fuel cell system 20 and the ESS 23 can provide power to one or more auxiliary systems of the vehicle 10.

The vehicle 10 may also comprise various other components not shown in FIG. 1.

Although the present disclosure is described with respect to a vehicle such as a truck, aspects of the present disclosure are not restricted to this particular vehicle, but may also be used in other vehicles such as passenger cars, off-road vehicles, aircrafts, and marine vehicles. The present disclosure may also be applied in vessels and in stationary applications, such as in grid-connected supplemental power generators or in grid-independent power generators.

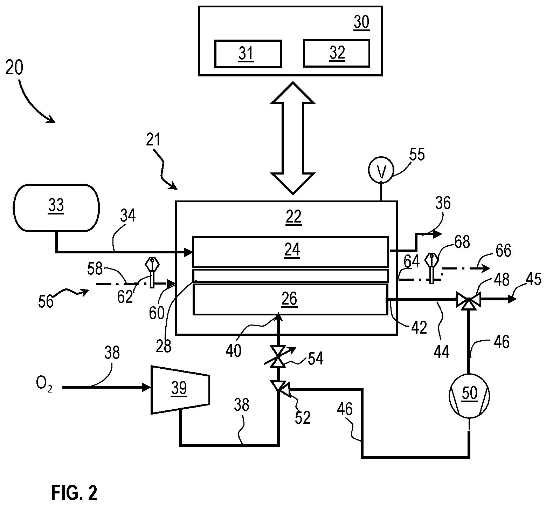

**FIG. 2** further illustrates an example of fuel cell system 20 that can be deployed in a fuel cell vehicle such as the vehicle 10. As shown, the fuel cell system 20 comprises the fuel cell unit 21 that in turn comprises the fuel cell stack 22. The fuel cell unit 21 may include more than one stack and the fuel cell stack 22 is shown as an example. Operation of the fuel cell system 20 is controlled by the control system 30 also shown in FIG. 2.

The fuel cell stack 22 comprises an anode side or anode 24, a cathode side or cathode 26, and an electrolyte 28 such as e.g. a proton exchange membrane (PEM) sandwiched between the anode 24 and the cathode 26. The fuel cell stack 22 is configured to generate power through an electrochemical reaction between a hydrogen gas and an oxidant.

The anode 24 receives fuel such as hydrogen gas that can be supplied from a hydrogen storage device 33 e.g. a hydrogen container or tank that may be refillable and/or replaceable. Any other suitable source of hydrogen can be used to supply the hydrogen gas to the anode 24. The anode 24 is configured to receive the hydrogen gas via an anode inlet line 34, and an anode outlet line 36 may be configured to receive and lead away from the anode 24 byproducts of operation of the anode 24.

The cathode 26 receives air or air flow e.g. from the ambient environment via a cathode inlet line 38, at a cathode inlet 40. The air may be filtered and pressurized by an air compressor 39. In some examples, the air compressor 39 may be an electric turbocharger (ETC) comprising a turbine and compressor. The air flow may be heated as a result of the compression by the air compressor 39. The air compressor 39 may be fluidly coupled to a charge air cooler (CAC), not shown in FIG. 2, that is configured to cool the air flow in the cathode inlet line 38 that is supplied to the cathode 26. The air flow may also be humidified by a humidifier (not shown).

The cathode 26 is configured to discharge, from a cathode outlet 42, a cathode exhaust flow that is flown through a cathode outlet line 44. The cathode exhaust flow may comprise liquid water and steam produced as byproducts of the electrochemical reaction in the fuel cell stack 22. The cathode exhaust flow may be carried via the cathode outlet line 44 to the outside, e.g., outside of the vehicle 10, as shown by an arrow 45. In some implementations, the liquid water and steam may be processed and reused, at least in part - e.g, liquid water may be extracted from the cathode exhaust flow.

In examples herein, the cathode outlet line 44 is fluidly coupled to a cathode recirculation loop or passage 46 that is configured to fluidly connect or couple the cathode outlet 42 to the cathode inlet 40 to divert the cathode exhaust flow e.g. a portion of the cathode exhaust flow to the cathode inlet 40, such that the cathode exhaust flow e.g. its portion is mixed with the air flow received by the cathode 26 at the cathode inlet 40. The cathode recirculation loop or passage 46 may also be referred to as an exhaust gas recirculation (EGR) loop or passage. A configuration of the cathode recirculation passage in accordance with aspects of the present disclosure such as e.g. the cathode recirculation passage 46 may depend on a general layout of the fuel cell system, components used, power level requirements, applications such as e.g. a vehicle, gen-set, boat, etc.

A volume flow rate of the cathode exhaust flow in the cathode recirculation passage 46 may be controlled in dependence on a power demand from the fuel cell system, as discussed in more detail below. The volume flow rate of the cathode exhaust flow in the cathode recirculation passage 46 may be controlled via at least one flow control valve. Thus, as shown in FIG. 2, a first flow control valve 48 may be positioned to allow a portion of the cathode exhaust flow be diverted from the cathode outlet line 44 to the cathode recirculation passage 46. The first flow control valve 48 is positioned at a coupling between the coolant outlet line 44 and the cathode recirculation passage 46. The first flow control valve 48 may be e.g. a three-way proportional valve, though other types of valves may be used. A degree of opening of the first flow control valve 48 may be controlled to control a volume flow rate of the cathode exhaust in the cathode recirculation passage 46. The cathode recirculation passage 46 may comprise a cathode recirculation pump 50 that is configured to pump the cathode exhaust flow through the cathode recirculation passage 46.

A second flow control valve 52 is positioned to also control a volume flow rate of the cathode exhaust flow that is flown from the cathode recirculation passage 46 into the cathode inlet line 38 so that a partial oxygen pressure in the air flow provided to the cathode 26 is decreased. As shown in FIG. 2, the second flow control valve 52 is positioned at a coupling between the cathode recirculation passage 46 and the coolant inlet line 38. The second flow control valve 52 may be e.g. a two-way proportional valve, though other types of valves may be used. A degree of opening of the second flow control valve 52 may be controlled to control a volume flow rate of the cathode exhaust that is diverted from the cathode recirculation passage 46 to the cathode inlet line 38.

In some examples, one or both of the cathode outlet line 44 and the cathode recirculation passage 46 may comprise a water separator or another similar component configured to extract water from the cathode exhaust flow. The presence of one or more water separators is optional and may depend on an amount of liquid water present in the cathode exhaust. In some examples, one or more water separators may be present and they may be selectively activated, e.g. when a need arises to decrease the amount of liquid water in the cathode exhaust flow. It may be desired to provide a drier cathode exhaust into the air flow that is supplied to the cathode at the cathode inlet 40.

Furthermore, in some examples, a cathode air pressure, also referred to as an air pressure in the cathode, may be controlled to prevent the membrane 28 of the fuel cell stack 22 from drying. For example, an air pressure control valve 54 may be fluidly coupled to the cathode inlet line 38 and the valve 54 may be controlled to regulate the air pressure in the cathode. In some implementations, in addition or alternatively, the air compressor 39, such as e.g. an ETC, may be controlled to regulate the air pressure in the cathode.

As shown in FIG. 2, the fuel cell unit 21 comprises a coolant system or cooling circuit 56 configured to circulate a coolant through the fuel cell stack 22. The coolant system 56 circulates a coolant such that the coolant flows into a coolant inlet 60 of the fuel cell stack 22 via a coolant inlet line 58 and flows out of a coolant outlet 64 of the fuel cell stack 22 via a coolant outlet line 66. The coolant system 56 may comprise components such as e.g. a radiator, a coolant tank for storing the coolant, a pump circulating the coolant, and a heater. The coolant is passed through and circulated in the fuel cell stack 22, and the coolant is output from the fuel cell stack via the coolant outlet 64 that is fluidly coupled to the coolant outlet line 66 that is configured to direct the coolant away from the fuel cell stack 22.

The coolant system 56, e.g., a circuit, is configured to regulate the temperature of the fuel cell stack 22, including to dissipate heat generated as a result of operation of the fuel cell stack 22. A temperature of the coolant at the coolant inlet 60 and the coolant outlet 64 may be controlled depending e.g. on a load on the fuel cell system 20 and other factors. FIG. 2 shows schematically that the coolant system 56 may comprise a coolant inlet temperature sensor 62 and a coolant outlet temperature sensor 68 that are configured to monitor temperature of the coolant at the coolant inlet 60 and at the coolant outlet 64, respectively. More than two temperature sensors may be deployed in various implementations.

In examples in accordance with the present disclosure, a target coolant inlet temperature of the coolant at the coolant inlet 60 may be controlled. In some examples this may be coupled with controlling the cathode pressure level, to thereby maintain the voltage of the fuel cell stack 22 to remain below 0.8V. The target coolant inlet temperature may be defined as a set point i.e. a value of the coolant temperature that is set to be achieved at the coolant inlet 60. The actual temperature of the coolant at the coolant inlet 60 may be measured e.g. using the coolant inlet temperature sensor 62.

Operation of the fuel cell unit 21 is controlled by the control system 30. In examples herein, as shown in FIG. 2, the control system 30 comprises processing circuitry 32 that is configured execute computer-executable instructions that, when executed by the processing circuitry 32, may perform a method in accordance with examples of the present disclosure. The control system 30 also comprises memory 31 that is configured to store the computer-executable instructions and various data. In some implementations, the computer-executable instructions may be stored, at least in part, remotely e.g. in a remote memory. The memory 31 may acquire data from various sources including from one or more remote storages.

The processing circuitry 32 of the control system 30 may be configured to obtain a value of power output that is requested from the fuel cell system 20. The power output that is requested from the fuel cell system 20 is defined by a load exerted on the fuel cell system 20. The processing circuitry 32 is further configured to, responsive to the value of the power output being below a first threshold power level, monitoring a voltage of the fuel cell stack 22. For example, a voltage sensor 55, shown schematically in FIG. 2, may be deployed to monitor voltage of the fuel cell stack 22. One or more suitable voltage sensors may be used. The single cell voltage of the fuel cell stack 22 may be determined as a total voltage of the fuel cell stack 22, as measured e.g. by the voltage sensor 55, divided by a number of fuel cells in the fuel cell stack 22. The processing circuitry 32 is further configured to control a target coolant inlet temperature of the coolant at the coolant inlet 60 and control the cathode pressure level to avoid degradation of the membrane 28, to thereby maintain the voltage of the fuel cell stack 22 to remain below 0.8V, which is a value above which the catalysts and the support material may be damaged.

In examples herein, the processing circuitry 32 of the control system 30 may be configured to control the target coolant inlet temperature by increasing the target coolant inlet temperature to a temperature threshold level. The processing circuitry 32 may be configured to, responsive to the value of the power output being below at least one second threshold power level that is smaller than the first threshold power level, when the target coolant inlet temperature is at the temperature threshold, control the coolant system 56 to direct a portion of the cathode exhaust flow to be mixed with the air flow to thereby reduce an oxygen partial pressure of the air flow. The second threshold power level may comprise more than one threshold power level. The value of the power output may be compared to one or more of the second threshold power levels and the amount of the cathode exhaust flow that is directed, via the cathode recirculation passage, to be mixed with the air flow in the cathode inlet line may be increased as the value of the power output. Thus, the oxygen partial pressure of the air flow may be reduced as the value of the power output that is requested from the fuel cell system 20 reduced. In other words, the lower current density in the fuel cell system 20 may require a lower oxygen partial pressure of the air flow. This, in combination with the increase in the target coolant inlet temperature, allows operating the fuel cell system 20 at lower loads while maintaining the voltage of the fuel cell stacks below 0.8V. A lower value of the power output requires a lower oxygen partial pressure of the air flow.

In some examples, the processing circuitry 32 of the control system 30 is configured to control, in dependance on the value of the power output, at least one flow control valve fluidly coupled to the cathode recirculation passage e.g., the first and second flow control valves 48, 52, and the cathode recirculation pump 50 that is fluidly coupled to the cathode recirculation passage 46 and configured to operate to drive the cathode exhaust flow through the cathode recirculation passage 46.

In some examples, the fuel cell unit 21 comprises one fuel cell unit. Thus, the fuel cell system 20 may comprise a single fuel cell unit.

It should be appreciated that the configuration of the fuel cell system 20 shown in FIG. 2 is by way example. Also, the fuel cell system 20 may comprise other components not shown in FIG. 2. For example, in addition to the cathode recirculation passage 46, the anode outlet line 36 may be fluidly coupled to an anode recirculation loop or passage that is configured to direct an anode exhaust to the anode inlet. In some examples, additionally or alternatively, the coolant outlet line 66 may be fluidly coupled to a coolant recirculation loop or passage that is configured to direct the coolant in the coolant outlet line 66 to the coolant inlet.

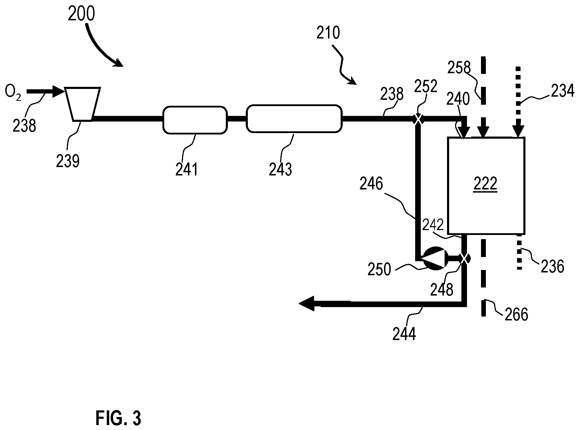

It should also be appreciated that the cathode recirculation passage may be fluidly connected to the cathode inlet line at various locations along the cathode inlet line that is configured to deliver the air flow from an air source, typically the ambient environment, to the inlet of the cathode. FIGs. 3, 4, and 5 show examples of a fuel cell system in accordance with aspects of the present disclosure where the cathode recirculation passage is fluidly coupled with the cathode inlet line at different positions along the cathode inlet line.

**FIG. 3** shows a fuel cell unit where a cathode recirculation passage is connected to the cathode inlet after or downstream of the humidifier. FIG. 3 illustrates a fuel cell system 200 comprising a fuel cell unit 221 that includes one or more fuel cell stacks of which a fuel cell stack 222 is shown as a representative. The fuel cell system 200 of FIG. 3 is generally similar to fuel cell system 20 of FIG. 2 and components of the fuel cell system 200 of FIG. 3 are therefore not described in detail herein. The fuel cell stack 222 comprises an anode and a cathode separated by a membrane which are not separately shown. The anode receives fuel such as hydrogen gas via an anode inlet line 234, and an anode outlet line 236 is configured to carry away from the anode byproducts of operation of the anode.

A coolant inlet line 258 is configured to direct a coolant flow or coolant to the fuel cell stack 222 such that the coolant passes through the fuel cell stack 222, and a coolant outlet line 266 receives the coolant after the coolant has passed through the fuel cell stack 222.

The cathode receives, via a cathode inlet line 238, air or air flow e.g. from the ambient environment, at a cathode inlet 240. The air may be filtered and pressurized by an air compressor 239. The air compressor 239 may be fluidly coupled to a charge air cooler (CAC) 241, positioned downstream of the air compressor 239 i.e. further away from the air inlet than the air compressor 239. In the example of FIG. 3, a humidifier 243 is fluidly coupled to the cathode inlet line 238, downstream of the CAC 241, and is configured to humidify the air being passed to the cathode through the cathode inlet line 238.

The cathode of the fuel cell stack 222 is configured to discharge a cathode exhaust flow at a cathode outlet 242 such that the cathode exhaust is flown through a cathode outlet line 244. As shown in FIG. 3, the cathode outlet line 244 is fluidly coupled to a cathode recirculation loop or passage 246 that fluidly connects the cathode outlet 242 to the cathode inlet 240 to divert the cathode exhaust flow to the cathode inlet 240, such that the cathode exhaust flow is mixed with the air flow received by the cathode at the cathode inlet 240. The cathode recirculation loop or passage 246 may also be referred to as an exhaust gas recirculation (EGR) loop or passage.

A volume flow rate of the cathode exhaust flow in the cathode recirculation passage 246 may be controlled via at least one flow control valve. Thus, as shown in FIG. 3, a flow control valve 248 may be positioned to allow a portion of the cathode exhaust flow be diverted from the cathode outlet line 244 to the cathode recirculation passage 246. A degree of opening of the valve 248 may be controlled to control a volume flow rate of the cathode exhaust in the cathode recirculation passage 246. The cathode recirculation passage 246 may comprise a cathode recirculation pump 250 that is configured to pump the cathode exhaust flow through the cathode recirculation passage 46. A flow control valve 252 is positioned to also control a volume flow rate of the cathode exhaust flow that is flown from the cathode recirculation passage 246 into the cathode inlet line 238 so that a partial oxygen pressure in the air flow provided to the cathode 226 is decreased. As shown in FIG. 3, in the fuel cell system 200, the cathode recirculation passage 246 is fluidly coupled to the cathode inlet line 238 after, or in other words, downstream of, the humidifier 243.

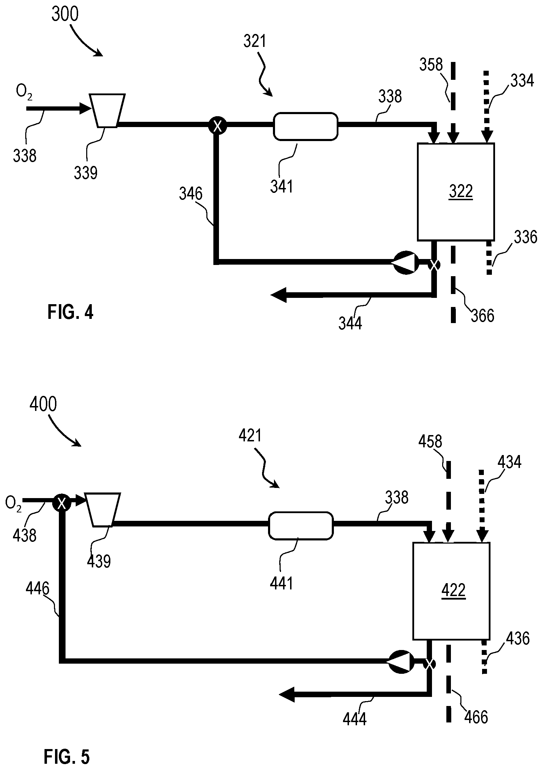

**FIG. 4** illustrates a fuel cell system 300 comprising a fuel cell unit 321 that includes at least one fuel cell stack 322. A configuration of the fuel cell system 300 is similar to the configuration of the fuel cell system 200 of FIG. 3 and only some of the components of the fuel cell system 300 of FIG. 4 are shown. An anode of the fuel cell stack 322 is configured to receive a hydrogen gas via an anode inlet line 334 and to expel byproducts of operation of the anode via an anode outlet line 336. A coolant inlet line 358 is configured to direct a coolant flow or coolant to the fuel cell stack 322 such that the coolant passes through the fuel cell stack 322, and a coolant outlet line 366 receives the coolant after the coolant has passed through the fuel cell stack 322. FIG. 4 is shown to illustrate an example of a position at which a cathode recirculation passage is fluidly coupled to a cathode inlet line. A cathode inlet line 338 of the fuel cell system 300 of FIG. 4 does not include a humidifier. A cathode recirculation passage 346, fluidly coupled to a cathode outlet line 344 configured to carry a cathode exhaust flow, is configured to fluidly couple to the cathode inlet line 338 between an air compressor 339 and a CAC 341, i.e. downstream of the air compressor 339 and upstream of the CAC 341.

**FIG. 5** illustrates a fuel cell system 400 comprising a fuel cell unit 421 that includes at least one fuel cell stack 422. A configuration of the fuel cell system 400 is similar to the configuration of the fuel cell system 200 of FIG. 3 and only some of the components of the fuel cell system 400 of FIG. 5 are shown. An anode of the fuel cell stack 422 is configured to receive a hydrogen gas via an anode inlet line 434 and to expel byproducts of operation of the anode via an anode outlet line 436. A coolant inlet line 458 is configured to direct a coolant flow or coolant fuel cell stack 422 such that the coolant passes through the fuel cell stack 422, and a coolant outlet line 466 receives the coolant after the coolant has passed through the fuel cell stack 422. FIG. 5 is shown to illustrate an example of a position at which a cathode recirculation passage is fluidly coupled to a cathode inlet line. A cathode inlet line 438 of the fuel cell system 400 of FIG. 5 does not include a humidifier. A cathode recirculation passage 446, fluidly coupled to a cathode outlet line 444 configured to carry a cathode exhaust flow, is configured to fluidly couple to a cathode inlet line 438 upstream of an air compressor 439 and a CAC 441 that is positioned downstream of the air compressor 439.

Various other configurations of a fuel cell system, and a cathode recirculation passage may be coupled with a coolant inlet line at a suitable location along the coolant inlet line. Fuel cell systems shown in FIGs. 3, 4, and 5 may be configured to be controlled in accordance with examples of the present disclosure. It should be noted that the fuel cell system 20 of FIG. 2 may be modified to be configured similar to the fuel cell systems of any of FIGs. 3, 4, and 5, or in another manner.

In examples in accordance with aspects of the present disclosure, a temperature of the fuel cell stack may be increased, e.g., by increasing a target coolant inlet temperature. Additionally, in some circumstances, the oxygen partial pressure in the air flow supplied to the input of the cathode may be reduced, e.g., via a cathode recirculation loop or passage e.g. an EGR. This allows for power reduction without having to greatly reduce an oxygen mass fraction in the air flow, thereby reducing a risk of oxygen starvation which may occur when the oxygen partial pressure in the air flow is reduced dramatically. Depending on how low a power request from the fuel cell system is, e.g. how low an idle power needs to be, the need to reduce the oxygen partial pressure reduces with higher idle power. And the operation of the cathode recirculation loop or passage helps controlling the membrane humidity as the fuel cell stack temperature is increased. In other words, the use of both the reduction of the oxygen partial pressure in the air flow and the increase in the fuel cell stack temperature allows for an improved management of the fuel cell system at low power demands.

Operation of the fuel cell system in accordance with aspects of the present disclosure is illustrated in the following example. Thus, as an example only, a value of power output requested from the fuel cell system may be above 60W. The single cell potential needs to be limited to 0.8V. As long as the value of the power output remains above or at 60kW, a target coolant inlet temperature may be maintained at normal coolant inlet setpoints e.g. such that a temperature of the stack is also controlled normally and the cathode recirculation passage is not activated i.e. the cathode exhaust flow is not supplied to be mixed with the air flow fed to the cathode inlet. A normal coolant inlet setpoint may be defined as, for example, 60°C for a NAFION-type membrane. Another temperature values may represent a normal coolant inlet setpoint.

Continuing with this example, if the power request to the fuel cell system drops below 60kW, at normal operating conditions and with the reduction in current density, the voltage of the fuel cell stack will increase and thus the single cell potential will raise above 0.8V.

In accordance with aspects of the present disclosure, as the power requested from the fuel cell system, e.g. by the vehicle in which the fuel cell system is deployed, drops below 60kW, a fuel cell control unit (FCCU) such as e.g. controller 30 (shown in FIGs. 1 and 2) assesses continuously the fuel cell stack voltage, to estimate the single cell voltage. The FCCU controls, as a function of the power requested from the fuel cell system, the fuel cell stack temperature and the volume flow rate of the cathode exhaust flow in the cathode recirculation passage.

When there is a need to reduce the power requested from the fuel cell system, also referred to as a net power, by a relatively high value, for instance, going from 60 kW to 20kW, a required volume flow rate of the cathode exhaust flow, from the cathode recirculation passage, may be relatively high, as oxygen partial pressure in the cathode inlet air flow is required to be reduced significantly. The vehicle demands from the fuel cell system a power that is referred to as the net power. As an example, Table 1, below, illustrates dependence of the oxygen mass fraction required in order to reach a certain fuel cell power and a certain single cell voltage as a function of a target coolant inlet temperature, also referred to as a coolant inlet setpoint.

**Table 1.**

| **O₂ mass fraction** | **Coolant inlet setpoint [°C]** | **FC net power [kW]** | **Single cell voltage [V]** |
|---|---|---|---|
| Normal (0.234) | 60 | 20 | 0.86 |
| 0.05 | | | 0.8 |
| 0.11 | 70 | | 0.8 |
| 0.14 | 80 | | 0.8 |
| Normal | 60 | 30 | 0.85 |
| 0.09 | | | 0.8 |
| 0.15 | 70 | | 0.8 |
| 0.21 | 80 | | 0.8 |
| Normal | 60 | 40 | 0.84 |
| 0.11 | | | 0.8 |
| 0.18 | 70 | | 0.8 |
| Normal | 80 | | 0.8 |

The required reduction in the oxygen partial pressure, however, significantly increases the risk of oxygen starvation in the fuel cell stack. Thus, undesired degradation mechanism may be triggered at the same time as the fuel cell power output may be unstable. Accordingly, in some cases, the usage of only the cathode recirculation passage may not be an appropriate solution.

The fuel cell stack temperature has a function of altering the fuel cell stack efficiency, in a way that, by increasing the fuel cell stack temperature e.g. with the increase of the target coolant inlet temperature, the fuel cell efficiency reduces and thus will require not so high reduction in oxygen partial pressures to reach the lower power required from the fuel cell system, as shown in the example of Table 1. In examples in accordance with the present disclosure, the cathode recirculation passage is thus used to both reduce the oxygen partial pressure and increase the humidity of the incoming air i.e. the air flow fed to the cathode, to help compensate for the reduction in the membrane/cell/stack humidity as the fuel cell stack temperature increases.

In some examples, e.g. with reference to example values shown in Table 1, the control system may implement a control strategy as follows. As a power consumer, e.g. a fuel cell vehicle, requests a lower power from a fuel cell system, e.g., lower than 70kW, or lower than 65kW, or lower than 60kW in some examples, the target coolant inlet temperature may be increased up to a certain value such as e.g. 80°C, if the fuel cell membrane cannot properly operate at higher temperatures. A single cell voltage is monitored as the target coolant inlet temperature is increased. The fuel cell stack temperature is also monitored, e.g., as a temperature of a coolant at the coolant inlet of the fuel cell stack and a temperature of the coolant at the coolant outlet of the fuel cell stack. If the temperature at the coolant inlet is already at 80°C and the need to reduce the power output of the fuel cell system is not yet fulfilled, as an example, one or more flow control valves and a recirculation pump in a cathode recirculation passage in accordance with examples of the present disclosure may be actuated or operated to divert at least a portion of a cathode exhaust flow into the air flow fed into the cathode inlet of the fuel cell stack.

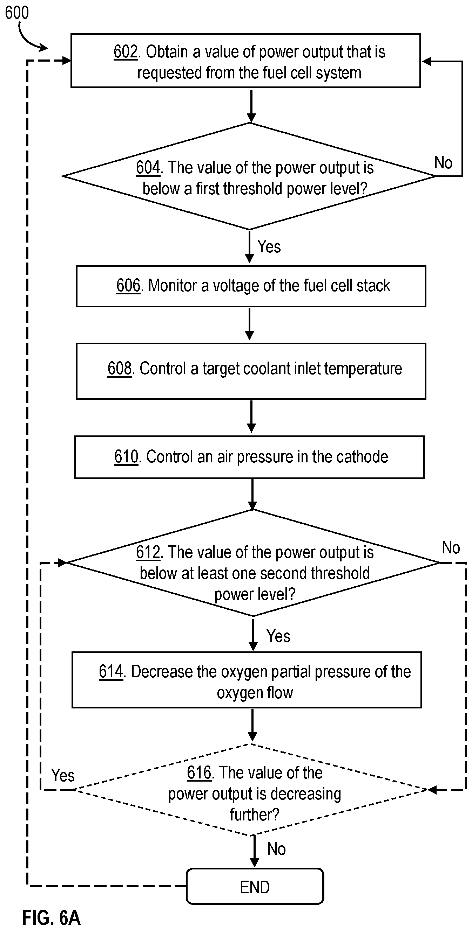

**FIG. 6A** illustrates an example of a process or method for operating a fuel cell system comprising a fuel cell unit that comprises a fuel cell stack comprising a cathode and an anode. The cathode is configured to receive an air flow via a cathode inlet line and to provide a cathode exhaust flow via a cathode outlet line. The air flow is received at a cathode inlet in fluid communication with the cathode inlet line, and the cathode exhaust flow is expelled from a cathode outlet in fluid communication with the cathode outlet line. The fuel cell unit comprises a cathode recirculation passage that fluidly connects the cathode outlet line to the cathode inlet line to thereby divert the cathode exhaust flow e.g. a portion of the cathode exhaust flow to the cathode inlet line, such that the cathode exhaust flow e.g. the portion of the cathode exhaust flow is mixed with the air flow received by the cathode inlet line. An amount of the cathode exhaust flow to the cathode inlet line that is diverted, via the cathode recirculation passage, to the cathode inlet line depends on a desired reduction in the oxygen partial pressure of the air flow transported through the cathode inlet line from an air source, e.g., the ambient air, to the cathode inlet.

The fuel cell unit also comprises a coolant system configured to circulate a coolant through the fuel cell stack, the coolant system comprising a coolant inlet line configured to direct the coolant to the fuel cell stack and a coolant outlet line configured to direct the coolant away from the fuel cell stack after the coolant has passed through the fuel cell stack.

The fuel cell system may be fuel cell system 20 of FIG. 2, or fuel cell system 300 (FIG. 3), or fuel cell system 400 (FIG. 4), or a fuel cell system having another configuration and configured to be operated in accordance with examples of the present disclosure. The cathode comprises a cathode inlet configured to receive an air flow, and a cathode outlet configured to provide a cathode exhaust flow. For example, the fuel cell system 20 of FIG. 2 comprises the anode 24 and the cathode 26. The method 600 is described hereinbelow in connection with FIG. 2 for illustration purposes only, and it should be appreciated that another fuel cell system may be used.

Furthermore, it should be noted that the processing shown in connection with the process or method 600 of FIG. 6A is shown under assumption that the ESS of the fuel cell system may not be able to accept excess power or it only accepts limited power, as the load on the fuel cell system decreases e.g. as the vehicle is decelerating or stops.

The method 600 may be performed by a controller or control system such as e.g. control system shown 30 in FIGs. 1 and 2. The processing circuitry 32 of the control system 30 may execute computer-executable instructions stored e.g. in memory of the control system 30, wherein the computer-executable instructions, when executed, cause the processing circuitry to perform the method 600.

The process 600 may begin at any suitable time. For example, it may be executed as a vehicle comprising the fuel cell system 20 is traveling a route and the load on the fuel cell system 20 changes. The power demand from the fuel cell system 20 may decrease when the vehicle 10 is traveling downhill, when it slows down due to e.g. traffic conditions, and/or in various other circumstances. The vehicle may travel the route, e.g., as part of a mission or task which may comprise traveling from a start point to an end point. The vehicle may be part of a fleet of vehicles. Furthermore, even though the process 600 is described herein by way of example as being implemented in the fuel cell system of the vehicle, it should be understood that the process 600 may be implemented in a stationary application.

At **block 602** shown in FIG. 6A, the process 600 comprises obtaining a value of power output that is requested from the fuel cell system. The value of power output may be a current value of the power output that is currently requested from the fuel cell system as it operates. The value of the power output is defined by the load on the fuel cell system which varies depending on a status of the application e.g. the vehicle comprising the fuel cell system. The value of power output, or requested power output, may be obtained repeatedly, as the vehicle is traveling and requests power from the fuel cell system.

In some examples, the value of the power output of the fuel cell system may be a predicted value of the power output of the fuel cell system. For example, for the fuel cell vehicle traveling a route, the control system 30 may predict that the vehicle is approaching a descending part of the route or road where the vehicle will be traveling downhill. Depending on the steepness of the hill and other factors, e.g, a weight of the vehicle, which may also be carrying a load, the upcoming decrease in the power demand from the fuel cell system may be predicted or estimated or determined.

A decreased power output required from the fuel cell system may be detected and/or predicted in various other situations and in dependence on various factors. For example, the vehicle may be decelerating, e.g., based on a driver input and/or automatically. Further, as an example, when an upcoming decrease in a speed limit in a route traveled by the fuel cell vehicle is detected, a decrease of the value of the power output that is requested from the fuel cell system may be predicted.

At decision **block 604,** the process 600 comprises determining whether the value of the power output is below a first threshold power level. The determining comprises comparing the value of the power output to the first threshold power level. The first threshold power level may be e.g., about 60kW. In some examples, the first threshold power level may vary within a range of from about 60kW to about 75kW, or from about 60kW to about 70kW.

Responsive to determining that the value of the power output is not below the first threshold power level, i.e. above or at the first threshold power level, the process 600 may return to block 602, as shown in FIG. 6A, where one or more subsequent values of the power output requested from the fuel cell system are obtained.

At **block 606,** responsive to determining that the value of the power output is below the first threshold power level, the control system may monitor a voltage of the fuel cell stack of the fuel cell unit of the fuel cell system. In some examples, the power output that has a value which is below the first threshold power level may be referred to as an idle power. The fuel cell system may be considered to be in an idle mode or state when the value of the power output is below the first threshold power level. In other words, in some examples, when the value of the power output is below the first threshold power level, the fuel cell system is operating in the idle mode or state.

The value of the power output, that is requested from the fuel cell system at a certain point in time and which may be a current or predicted value, may be below the first threshold power level when the load on the fuel cell system is reduced to a value at which a single cell voltage may raise to a value which creates a danger of damage of the catalysts and/or the carbon support material. The control system 30 may begin monitoring the voltage of the fuel cell stack when the value of the power output is below the first threshold power level. For example, a voltage sensor such as e.g. voltage sensor 55 shown in FIG. 2 may be used to acquire measurements of voltage of the fuel cell stack 22, and the single cell voltage may be determined based on the acquired measurements.

In some examples, the single cell voltage of the fuel cell stack 22 may be determined as a measured voltage of the fuel cell stack 22 divided by a number of fuel cells in the fuel cell stack 22. Thus, the single cell voltage may be determined as an average single cell voltage and it represents a voltage of each fuel cell in each fuel cell stack. In some examples, the single cell voltage may be determined from a measured voltage of the entire fuel cell unit, in which case this measured voltage is divided by the number of stacks and the number of cells in each stack. In some examples, a voltage of each fuel cell is measured and an average value of these measured voltages may be taken as the single cell voltage of the fuel cell stack. Regardless of the way in which the single cell voltage of the fuel cell stack is measured, the fuel cell system is controlled so that the single cell voltage does not exceed 0.8V.

In some examples, the value of the power output may be below the first threshold power level but above a second threshold power level that is below the first threshold power level. Thus, to allow the load on the fuel cell system to be reduced to a desired lower value, it may be sufficient to reduce a target coolant inlet temperature, as discussed further below. If the value of the requested power output is reduced further, e.g. to a value that is below the second threshold power level, oxygen partial pressure in the air flow fed to the cathode will need to be reduced, as also discussed below.

In some examples, the value of the power output may be low enough such that it is below the first threshold power level and also below the second threshold power level that is below the first threshold power level. For example, the vehicle may be slowing down abruptly and the value of the power output may reduce quickly to a value that is below the second threshold power level. The fuel cell system may enter an idle mode or state.

At **block 608,** the process 600 comprises adjusting or controlling the target coolant inlet temperature to thereby maintain the voltage of the fuel cell stack to remain below 0.8V. The target coolant inlet temperature may be adjusted or controlled, in dependence on the value of the power output, by increasing the target coolant inlet temperature to a temperature threshold level. In some examples, the temperature threshold level is 80 °C. In some examples, the temperature threshold level is 60 °C. In some examples, the temperature threshold level is 70 °C. In some examples, the temperature threshold level is in a range of between 60 °C and 80 °C. The voltage of the fuel cell stack is monitored as the target coolant inlet temperature is controlled.

The target coolant inlet temperature is increased to thereby increase a temperature of the fuel cell stack of the fuel cell system. The increase in the temperature of the fuel cell stack, with the increase of the target coolant inlet temperature, affects the fuel cell stack efficiency that may be decreased with the increase in the temperature of the fuel cell stack. The efficiency of the fuel cell system is intentionally decreased.

As the fuel cell stack becomes less efficient, the fuel cell stack will require a lesser reduction in the oxygen partial pressure in the air flow at the input to the cathode to reach a lower value of the power requested from the fuel cell system. This is an advantage since, in this way, a risk of oxygen starvation in the fuel cell stack is reduced or eliminated. As another advantage, a faster and more stable control of a net power of the fuel cell system. Also, a control of an EGR mass flow rate and the single cell voltage are improved.

At **block 610,** the process 600 comprises controlling an air pressure in the cathode of the fuel cell stack of the fuel cell unit, wherein the air pressure in the cathode is also referred to as a cathode air pressure. In some cases, responsive to a decrease in the value of the power output of the fuel cell system, the control system may control the fuel cell system to increase the cathode air pressure. The cathode air pressure may be controlled to prevent the membrane of the fuel cell from drying. When a target coolant inlet temperature is increased, at block 608, there is increased possibility of drying out the membrane of the fuel cell stack. To avoid that, i.e., to be able to raise the target coolant inlet temperature above a certain level, the air pressure in the cathode of the fuel cell stack has to be also increased. This prevents the membrane from drying. That is possible with the active control of e.g. an electric turbocharger (ETC) of the air compressor, in order to increase the air pressure in the cathode side.

Thus, in some examples, the control system obtains or determines the power request from the fuel cell system, determines the target coolant inlet temperature, and determines whether a boost also needs to be raised, i.e. whether the air compressor needs to be controlled to increase an air pressure. It should be appreciated that the processing at blocks 608 and 610 may be performed simultaneously or substantially simultaneously i.e. with some overlap in time, and blocks 608 and 610 are shown separately for illustration purposes only.

At decision **block 612,** the process 600 comprises determining whether the value of the power output requested from the fuel cell system is below at least one second threshold power level that is smaller than the first threshold power level. The determining comprises comparing the value of the power output to the at least one second threshold power level which may comprise more than one second threshold power level such that the value of the power output may be compared to more than one value of the second threshold power level.

In some examples, the value of the power output requested from the fuel cell system may first decrease to below the first threshold power level but above the second threshold power level, and then further decrease to the second threshold power level which may be one or more power levels. As an example, a value of the power output may first decrease to below the first threshold power level which may be 60KW or a value that is greater than 60kW, then decrease to below 40KW and then to below 30 KW, where the second threshold power level comprises two second threshold power levels - 40kW and 30kW. The second threshold power level may have any other values below the first threshold power level. For example, the second threshold power level may comprise 40kW, or 30kW, or 20kW, or another suitable value.

It should be noted that a specific value, or a range of values, of the first threshold power level and one or more values of the second threshold power level may depend on properties of the fuel cell unit and the entire fuel cell system that may comprise one or more fuel cell units. In some examples in accordance with aspects of the present disclosure, the fuel cell system comprises one i.e. single fuel cell unit of a high or higher efficiency. A fuel cell system having a higher efficiency may have a higher value of the first threshold power than a fuel cell system having a lower efficiency.

Responsive to determining that the value of the power output is not below the second threshold power level, i.e. above or at the second threshold power level, the process 600 may return to optional block 616, as shown in FIG. 6A, where it is determined whether the value of the power output is decreasing further, as discussed in more detail below.

At **block 614,** responsive to the value of the power output being below the at least one second threshold power level that is smaller than the first threshold power level, the process 600 comprises controlling the target coolant inlet temperature and controlling an oxygen partial pressure of the air flow, wherein the oxygen partial pressure is controlled by controlling a volume flow rate of the cathode exhaust flow that is directed from the cathode outlet line to the cathode inlet line to be mixed with the air flow. Thus, both the target coolant inlet temperature is controlled and the oxygen partial pressure in the air flow is adjusted or controlled. Thus, responsive to the value of the power output being below the at least one second threshold power level that is smaller than the first threshold power level, when the target coolant inlet temperature is at the temperature threshold, the control system may control the cathode recirculation passage to direct a portion of the cathode exhaust flow to be mixed with the air flow to thereby reduce an oxygen partial pressure of the air flow. In some examples, the oxygen partial pressure may be reduced in dependance on the required decrease in the power demand from the fuel cell system, for example, in accordance with values shown in Table 1 herein, though it should be appreciated that the values in Table 1 are shown as a non-limiting examples only. Depending on specifics of the fuel cell system and other factors, other values may be used.

The controlling of the oxygen partial pressure of the air oxygen flow may comprise controlling at least one flow control valve and a cathode recirculation pump fluidly coupled to the cathode recirculation passage that fluidly connects the cathode outlet line to the cathode inlet line to thereby divert a portion of the cathode exhaust flow to the cathode inlet line such that the cathode exhaust flow is mixed with the air oxygen flow. The control system may control the at least one flow control valve and the cathode recirculation pump in dependance on the value of the power output. The at least one flow control valve and the cathode recirculation pump may be activated and/or actuated to allow a portion of the cathode exhaust flow in the cathode outlet line to be flown, through the cathode recirculation passage, to the cathode inlet line. For example, with reference to FIG. 2, the first and second flow control valves 48, 52 and the cathode recirculation pump 50 may be controlled to allow a portion of the cathode exhaust flow in the cathode outlet line 44 to be directed, through the cathode recirculation passage 46, to the cathode inlet line 38.

In examples herein, depending on how low the idle power of the fuel cell system needs to be, the need for the cathode recirculation passage to be controlled to reduce the oxygen partial pressure reduces with higher idle power. At the same time, the cathode recirculation passage helps controlling the membrane humidity as the fuel cell stack temperature is increased.

At **block 616,** the control system may optionally determine whether the value of the power output that is requested from the fuel cell system is further decreasing. Responsive to determining that the value of the power output continues to decrease, the value of the power output may be compared to one or more successively decreasing second threshold power levels of the at least one second threshold power level. Thus, as shown in FIG. 6A, if it is determined that the value of the power output that is requested from the fuel cell system is further decreasing, the process 600 may return to block 612 where the value of the power output is compared to another second threshold power level, such as a second threshold power level having a lower value than a second threshold power level to which the value of the power output was previously compared. As the value of the power output continues to decrease, the fuel cell system is controlled to adapt to the decreasing load on the fuel cell system, in accordance with examples of the present disclosure.

Responsive to determining that the value of the power output is not decreasing further, the process 600 may end as shown in FIG. 6A. However, it should be appreciated that the process 600 may be performed continuously, as the fuel cell system is operating. For example, as the load on the fuel cell system increases, the process 600 may return back to block 602 as shown schematically in FIG. 6A, where one or more values of the power output that is requested from the fuel cell system are obtained or acquired.

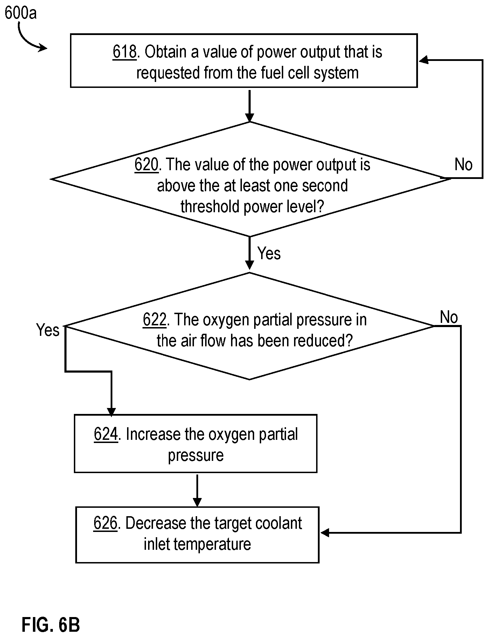

FIG. 6B illustrates an example of a process 600a that may be performed as the value of the power output requested from the fuel cell system increases. For example, the load on the fuel cell system may increase and the fuel cell system may exit the idle state or mode. The process 600a may be performed by the control system 30. As the fuel cell system is operating, e.g., as the vehicle is traveling a route and the load on the fuel cell system varies, the control system 30 may perform the processing in accordance with the process 600 of FIG. 6A as the load decreases and the processing in accordance with the process 600a of FIG. 6B as the load increases.

At **block 618** of FIG. 6B, the value of the power output that is requested from the fuel cell system may be obtained or acquired. The value of the power output requested from the fuel cell system may be acquired continuously as the fuel cell system is operating.

At decision **block 620,** it may be determined whether the value of the power output is above the at least one second threshold power level. In some examples, when the at least one second threshold power level comprises more than one second threshold power level, the value of the power output may be compared to a second threshold power level having a lowest value. For example, if the second threshold power level comprises threshold power levels having values of 40kW, 30kW, and 20kW, respectively, the current value of the power output may be compared to the lowest value i.e. 20 kW.

If the value of the power output is not above the at least one second threshold power level, i.e. if the value of the power output is not above any of the second threshold power level that are used, the process 600a may return to block 618 where further values of the power output may be obtained. In such circumstances, the control system may continue controlling the fuel cell system in accordance with the process 600 of FIG. 6A.

At decision **block 622,** responsive to determining that the value of the power output is above the at least one second threshold power level, indicating the increase in the load, the control system may determine whether the oxygen partial pressure in the air flow has been reduced. In other words, it is determined whether the cathode recirculation loop or passage has been used, e.g. is currently being used, and the oxygen partial pressure in the air flow was reduced when the load on the fuel cell system was decreasing. As discussed above, one or more flow control values and a cathode recirculation pump fluidly coupled to the cathode recirculation loop or passage may be activated and/or actuated to allow a portion of the cathode exhaust flow to be directed to the cathode inlet line.

At **block 624,** responsive to determining that the oxygen partial pressure in the air flow has been reduced, the oxygen partial pressure in the air flow may be increased. For example, the flow control values and the cathode recirculation pump may be controlled to reduce the volume flow rate of the cathode exhaust flow that is directed from the cathode recirculation pump to the cathode inlet line, thereby the oxygen partial pressure in the air flow in the cathode inlet line is increased.

As the value of the power output requested from the fuel cell system continues to increase, the oxygen partial pressure in the air flow may be increased accordingly. At some point, e.g., when the value of the power output raises to above a second threshold power level having the highest value of the at least one second threshold power level, the at least one flow control valve and the cathode recirculation pump may be controlled to fully block the cathode exhaust flow from entering the cathode recirculation passage.

At **block 626,** the control system may control the fuel cell system e.g. the coolant system to decrease the target coolant inlet temperature. The target coolant inlet temperature is decreased so that the efficiency of the fuel cell system is increased, because there may be no need to intentionally decrease its efficiency as the load is increasing.

As shown in FIG. 6B, at block 626, the control system may control the coolant system to decrease the target coolant inlet temperature also responsive to determining, at block 622, that the oxygen partial pressure in the air flow has not been reduced, which may occur when only the target coolant inlet temperature has been controlled, in combination with controlling the air pressure at the cathode. In other words, if, when the values of the power output, as the power output was decreasing, were not low enough to require activation of the cathode recirculation passage, as the load on the fuel cell system increases, only the target coolant inlet temperature is decreased. The air pressure at the cathode may be decreased.

In examples in accordance with aspects of the present disclosure, as the value of the power output requested from the fuel cell system continues to increase, the target coolant inlet temperature may be decreased to a value that is considered a normal target coolant inlet temperature. Thus, as the value of the requested power output may increase to be above the first threshold power level, the target coolant inlet temperature may be controlled to be at a level, or within a range, of what is considered a normal target coolant inlet temperature.

The processing at block 626 of FIG. 6B may be followed by processing at block 618 of FIG. 6B, if the load on the fuel cell system continues to increase or varies within a certain range without going below the first threshold power level. The processing at block 626 of FIG. 6B may be followed by processing at block 602 of FIG. 6A, if the load on the fuel cell system decreases. In either of these cases, the value of the power output is acquired or obtained and may then be compared to one or more threshold power levels as described herein.

As mentioned above, the methods in accordance with examples of the present disclosure may be implemented in a genset. In some examples, the methods in accordance with examples of the present disclosure may be implemented in a stationary system comprising a fuel cell system.

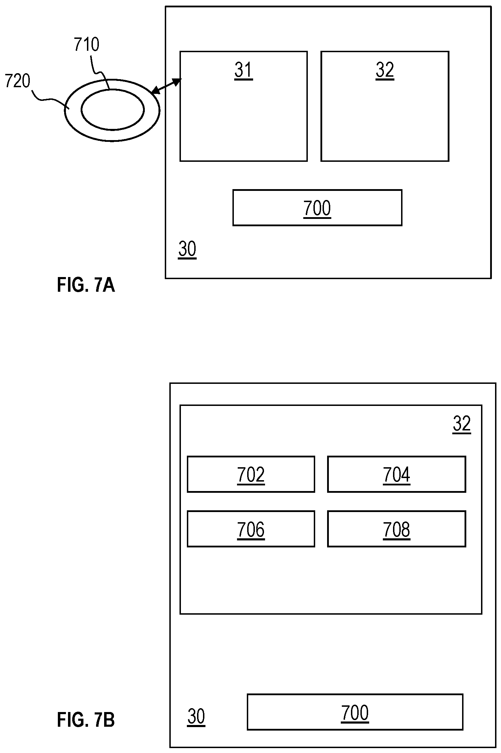

To perform the method steps described herein, the control system 30 may be configured to perform the processing described in connection with FIGs. 6A and 6B and/or any other examples in accordance with the present disclosure. The control system 30 may, for example, comprise an arrangement as depicted in **FIGs. 7A** and **7B****.** The control system 30 may be positioned in any suitable location of the vehicle 10 or another system in which methods in accordance with aspects of the present disclosure are implemented. In some examples, the control system 30 may be a remote control system or some of its functions may be performed in a remote control system.

As shown in **FIG. 7A****,** the control system 30 comprises processing circuitry 32, memory 31, and an input and output interface 700 configured to communicate with any necessary components and/or entities of examples herein. The input and output interface 700 may comprise a wireless and/or wired receiver and a wireless and/or wired transmitter. In some examples, the input and output interface 700 may comprise a wireless and/or wired transceiver. The control system 30 may use the input and output interface 700 to control and communicate with various sensors, actuators, subsystems, and/or interfaces of the fuel cell system and the vehicle 10, by using any one or more out of a Controller Area Network (CAN) bus, ethernet cables, Wi-Fi, Bluetooth, and/or other network interfaces.

The methods described herein may be implemented using processing circuitry, e.g., one or more processors, such as the processing circuitry 32 of the control system 30, together with computer program code stored in a computer-readable storage medium for performing the functions and actions of the examples herein.

The memory 31 may comprise one or more memory units. The memory 31 comprises computer-executable instructions executable by the processing circuitry 32 of the control system 30. The memory 31 is configured to store, e.g., information, data, etc., and the computer-executable instructions to perform, when executed by the processing circuitry 32, the methods in accordance with examples herein. The control system 30 may additionally obtain information from an external memory.

The methods according to the aspects of the present disclosure may be implemented by e.g. a computer program product 710 or a computer program, comprising computer-executable instructions, i.e., software code portions, which, when executed on at least one processor, e.g., the processing circuitry 32, cause the at least one processor to carry out the actions described herein, as performed by the control system 30.

In some examples, the computer program product 710 is stored on a computer-readable storage medium 720. The computer-readable storage medium 720 may be, e.g., a disc, a universal serial bus (USB) stick, or similar device. The computer-readable storage medium 720, having stored thereon the computer program product, may comprise computer-executable instructions which, when executed by the processing circuitry 32, cause the processing circuitry 32 to perform the actions of the methods in accordance with examples of the present disclosure described herein, as performed by the control system 30.

As shown in **FIG. 7B****,** the control system 30 may comprise **an obtaining unit 702.** The control unit system 30, the processing circuitry 32, and/or the obtaining unit **702** are configured to obtain a value of power output that is requested from the fuel cell system, the value of the power output indicating a power demand from the fuel cell system during operation of the fuel cell vehicle or another power consumer in which the fuel cell system is deployed. The control unit system 30, the processing circuitry 32, and/or the obtaining unit **702** may be configured to determine the value of power output of the fuel cell system. In some examples, the obtained value of the power output may be a predicted value of the power output of the fuel cell system. The value of the power output may be obtained as part of the processing shown at block 602 of FIG. 6A and/or as part of the processing shown at block 618 of FIG. 6B.

In some examples, the value of the power output may be a predicted value of the power output that is expected to be requested from the fuel cell system. The value of the power output may be predicted using, e.g., features of a route that is being traveled by the vehicle including the fuel cell system, as well as other relevant features such as e.g. a current location of the vehicle, current and upcoming traffic conditions along the route, actual and/or predicted weather, and other features. For example, the control system may predict that the vehicle is approaching a portion of the route where a power demand on the fuel cell system will decrease, e.g., the vehicle will travel downhill, or the vehicle will stop for a certain duration of time, or another circumstances will cause the vehicle to operate such that the power output that is requested from the fuel cell system will decrease.

In some examples, the control system 30 and/or the processing circuitry 32 may comprise a predicting unit, not separately shown herein, that is configured to predict or estimate that the value of the power output, based on properties of the route that is being traveled by the vehicle and various other features.

In some examples, the fuel cell system may be included in a stationary application, and a value of the power output to be requested from the fuel cell system of the stationary application may be predicted using, e.g, data on prior history of operation of the stationary application and/or on other factors.

As also shown in **FIG. 7B****,** the control system 30 may comprise **a determining unit 704.** The control system 30, the processing circuitry 32, and/or the determining unit 704 are configured to determine whether the value of the power output is below a first threshold power level. The value of the power output may be determined or predicted. The first threshold power level may be e.g., about 60kW. In some examples, the first threshold power level may vary within a range of from about 60kW to about 75kW, or from about 60kW to about 70kW. In some examples, the first threshold power level may be a value within a range of values.

The control system 30 may comprise **a monitoring unit 706.** The control system 30, the processing circuitry 32, and/or the monitoring unit 706 are configured to, responsive to the value of the power output being below the first threshold power level, monitor a voltage of the fuel cell stack of the fuel cell unit of the fuel cell system. The control system 30, the processing circuitry 32, and/or the monitoring unit 706 may begin monitoring the voltage of the fuel cell stack once it is determined that the load on the fuel cell system has decreased such that the value of the power output is below the first threshold power level. The control system 30, the processing circuitry 32, and/or the monitoring unit 706 may employ one or more voltage sensors associated with the fuel cell stack and configured to acquire measurements of the voltage of the fuel cell stack. In examples herein, the control system 30 is configured to control operation of the fuel cell system so that the voltage of the fuel cell stack, also referred to as a single cell voltage, which may be determined based on voltage sensor measurements, is kept below 0.8V. As discussed herein, if the single cell voltage is at or exceeds 0.8V, degradation of the catalysts and the support material of the fuel cell stack may begin which reduces durability and the overall lifetime of the fuel cell system.

The control system 30 may comprise **a controlling unit 708.** The control system 30, the processing circuitry 32, and/or the controlling unit 708 are configured to, responsive to the value of the power output being below the first threshold power level and as the voltage of the fuel cell stack is monitored, control a target coolant inlet temperature of a coolant at a coolant inlet of the fuel cell stack, to thereby maintain the voltage of the fuel cell stack to remain below 0.8V. The controlling of the target coolant inlet temperature is performed by increasing the target coolant inlet temperature to a temperature threshold level. In some examples, the temperature threshold level is 80 °C. In some examples, the temperature threshold level comprises other values.

The control system 30, the processing circuitry 32, and/or the monitoring unit 706 may be configured to monitor temperature sensors which may be positioned to acquire temperature measurements of the coolant, whereby a temperature of the fuel cell stack is controlled and/monitored. For example, as shown in FIG. 2, the coolant system 56 may comprise the coolant inlet temperature sensor 62 and the coolant outlet temperature sensor 68 that are configured to monitor a temperature of the coolant at the coolant inlet 60 and at the coolant outlet 64, respectively. The control system 30, the processing circuitry 32, and/or the monitoring unit 706 may be configured to acquire temperature measurements obtained by the coolant inlet and outlet temperature sensors 62, 68, as well as by various other sensors that may be deployed in the fuel cell system.

In some examples, the control system 30, the processing circuitry 32, and/or the controlling unit 708 may be configured to control an air pressure at a cathode of the fuel cell stack as the value of the target coolant inlet temperature is controlled. For example, the air pressure at the cathode may be increased as the target coolant inlet temperature is increased. The air pressure at the cathode may be controlled by controlling the air compressor configured to pressurize the air flow delivered to the cathode inlet, e.g., from the ambient environment. Controlling e.g. increasing the air pressure at the cathode inlet may prevent the membrane of the fuel cel stack from drying out as the target coolant inlet temperature is increased.

The control system 30, the processing circuitry 32, and/or the determining unit 704 may be configured to determine whether the value of the power output is below at least one second threshold power level that is smaller than the first threshold power level. The at least one second threshold power level may comprise multiple threshold power levels such that the value of the power output may be compared to more than one second threshold power level, wherein the second threshold power levels may have successively decreasing values. As a non-limiting example only, the second threshold power levels may comprise four threshold power levels having values of 50kW, 40kW, 30kW, and 20kW, respectively. Also as a non-limiting example, the first threshold power level may comprise a value of 60 kW or greater than 60kW when the at least one second threshold power level comprises values smaller than 60kW.

In examples in accordance with the present disclosure, when a power demand on the fuel cell system, referred to as a value of power output that is requested from the fuel cell system, reduces to a certain degree, e.g. drops to values below the first threshold power level, the target coolant inlet temperature may be increased to a certain temperature threshold level e.g. 80 °C. The air pressure at the cathode may simultaneously be controlled. The power demand may be below the first threshold power level but above a second threshold power level that is smaller than the first threshold power level, such that increasing the target coolant inlet temperature and controlling e.g. increasing the air pressure at the cathode may be sufficient to allow the power demand to be decreased as desired while the voltage of the fuel cell stack is maintained to remain below 0.8V

As the power demand on the fuel cell system reduces further, e.g. drops below the second threshold power level, in addition to increasing the target coolant inlet temperature, an oxygen partial pressure in the cathode input air flow will need to be reduced to continue maintaining the voltage of the fuel cell stack below 0.8V and allowing the power demand to be decreased further.

Accordingly, in some examples, the control system 30, the processing circuitry 32, and/or the controlling unit 708 may be configured to, responsive to the value of the power output being below the at least one second threshold power level that is smaller than the first threshold power level, control the target coolant inlet temperature and also control an oxygen partial pressure of the air flow, wherein the oxygen partial pressure is controlled by controlling a volume flow rate of the cathode exhaust flow that is directed from the cathode outlet line to the cathode inlet line to be mixed with the air flow. Thus, when the target coolant inlet temperature is at the temperature threshold, the control system 30, the processing circuitry 32, and/or the controlling unit 708 may be configured to control the cathode recirculation passage to direct a portion of the cathode exhaust flow to be mixed with the air flow to thereby reduce the oxygen partial pressure of the air flow.

In some examples, the control system 30, the processing circuitry 32, and/or the controlling unit 708 may be configured to control, in dependance on the value of the power output, at least one flow control valve fluidly coupled to the cathode recirculation passage and a cathode recirculation pump fluidly coupled to the cathode recirculation passage and that is configured to operate to drive the cathode exhaust flow through the cathode recirculation passage. The air pressure at the cathode of the fuel cell stack is controlled as both the target coolant inlet temperature is controlled and oxygen partial pressure in the air flow is reduced by mixing the air flow, e.g. fresh air from the outside, with a portion of the cathode exhaust flow diverted from the cathode output line into the cathode input line configured to feed the air flow to the cathode.

In some examples, as discussed above, the at least one second threshold power level may comprise more than one threshold power level and the value of the power output may be compared to more than one second threshold power level. The smaller the value of the second threshold power level, the greater the reduction in the oxygen partial pressure in the cathode inlet air flow may be required. In other words, a lower value of the power output, which is requested from the fuel cell system, requires a lower oxygen partial pressure of the air flow.

In some examples, the control system 30, the processing circuitry 32, and/or the determining unit 704 may be configured to determine whether the value of the power output that is requested from the fuel cell system is further decreasing. The control system 30, the processing circuitry 32, and/or the determining unit 704 may further be configured to, responsive to determining that the value of the power output continues to decrease, compare the value of the power output to one or more successively decreasing second threshold power levels of the at least one second threshold power level. The control system continues controlling the operation of the fuel cell system in dependance on the value of the power output. For example, with reference to Table 1, the oxygen partial pressure may be adjusted in dependance on the required decrease in the power demand from the fuel cell system.

In some examples, the control system 30, the processing circuitry 32, and/or the determining unit 704 may be configured to determine whether the value of the power output is above the at least one second threshold power level, e.g., as shown at block 620 of FIG. 6B. This may occur when the load on the fuel cell system increases. For example, the fuel cell system may exit the idle mode.

In some examples, the control system 30, the processing circuitry 32, and/or the determining unit 704 may be configured to, responsive to determining that the value of the power output is above the at least one second threshold power level, determine whether the oxygen partial pressure in the air flow has been reduced, e.g., as shown at block 622 of FIG. 6B.

In some examples, the control system 30, the processing circuitry 32, and/or the controlling unit 708 may be configured to, responsive to determining that the oxygen partial pressure in the air flow has been reduced, control the cathode recirculation passage so as to increase the oxygen partial pressure in the air flow, e.g., as shown at block 624 of FIG. 6B. In some examples, the control system 30, the processing circuitry 32, and/or the controlling unit 708 may be also configured to control the fuel cell system, e.g. the coolant system, to decrease the target coolant inlet temperature, e.g., with reference to block 626 of FIG. 6B.

Those skilled in the art will appreciate that the units in the control system 30 described above may refer to a combination of analogue and digital circuits, and/or one or more processors configured with software and/or firmware, e.g., stored in the control system 30, that, when executed by the respective one or more processors, may perform the methods in accordance with embodiments of the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A fuel cell system (20, 200, 300, 400), comprising:
a fuel cell unit (21, 221, 321, 421) that comprises a fuel cell stack (22, 222, 322, 422) comprising a cathode and an anode, the cathode being configured to receive an air flow via a cathode inlet line (38, 238, 338, 438) and to provide a cathode exhaust flow via a cathode outlet line (44);
a cathode recirculation passage (46, 246, 346, 446) that fluidly connects the cathode outlet line to the cathode inlet line to thereby divert the cathode exhaust flow to the cathode inlet line, such that the cathode exhaust flow is mixed with the air flow received by the cathode inlet line;
a coolant system (56) configured to circulate a coolant through the fuel cell stack (22, 222, 322, 422), the coolant system comprising a coolant inlet line (58, 258, 358, 458) configured to direct the coolant to the fuel cell stack and a coolant outlet line (66, 266, 366, 466) configured to direct the coolant away from the fuel cell stack after the coolant has passed through the fuel cell stack (22, 222, 322, 422);
a control system (30) comprising processing circuitry (32) that is configured to:
obtain a value of power output that is requested from the fuel cell system; and
responsive to the value of the power output being below a first threshold power level,
monitor a voltage of the fuel cell stack; and
control a target coolant inlet temperature of the coolant at the coolant inlet to thereby maintain the voltage of the fuel cell stack to remain below 0.8V.

2. The fuel cell system of claim 1, wherein the processing circuitry of the control system is configured to control the target coolant inlet temperature by increasing the target coolant inlet temperature to a temperature threshold level.

3. The fuel cell system of claim 1 or 2, wherein the processing circuitry of the control system is configured to control an air pressure at the cathode of the fuel cell stack as the target coolant inlet temperature is controlled.

4. The fuel cell system of any one of claims 1 to 3, wherein the processing circuitry of the control system is configured to, responsive to the value of the power output being below at least one second threshold power level that is smaller than the first threshold power level, when the target coolant inlet temperature is at the temperature threshold, control the cathode recirculation passage to direct a portion of the cathode exhaust flow to be mixed with the air flow to thereby reduce an oxygen partial pressure of the air flow.

5. The fuel cell system of claim 4, wherein the processing circuitry of the control system is configured to control, in dependance on the value of the power output, at least one flow control valve (48, 52, 248, 252) fluidly connected to the cathode recirculation passage and a cathode recirculation pump (50, 250) fluidly connected to the cathode recirculation passage and that is configured to operate to drive the cathode exhaust flow through the cathode recirculation passage.

6. The fuel cell system of any one of claims 1 to 5, wherein the fuel cell unit comprises one fuel cell unit; and/or
wherein the obtained value of the power output is a predicted value of the power output of the fuel cell system.

7. A fuel cell vehicle (10) comprising a fuel cell system of any one of claims 1 to 6.

8. A method (600) for operating a fuel cell system comprising a fuel cell unit that comprises a fuel cell stack comprising a cathode and an anode, the cathode being configured to receive an air flow via a cathode inlet line and to provide a cathode exhaust flow via a cathode outlet line, the method comprising:
obtaining (602) a value of power output that is requested from the fuel cell system;
responsive (604) to the value of the power output being below a first threshold power level,
monitoring (606) a voltage of the fuel cell stack, and
controlling (608) a target coolant inlet temperature of a coolant at a coolant inlet of the fuel cell stack to thereby maintain the voltage of the fuel cell stack to remain below 0.8V; and
responsive (612) to the value of the power output being below at least one second threshold power level that is smaller than the first threshold power level, controlling (608) the target coolant inlet temperature and controlling (614) an oxygen partial pressure of the air flow, wherein the oxygen partial pressure is controlled by controlling a volume flow rate of the cathode exhaust flow that is directed from the cathode outlet line to the cathode inlet line to be mixed with the air flow.

9. The method of claim 8, comprising controlling the target coolant inlet temperature by increasing the target coolant inlet temperature to a temperature threshold level.

10. The method of any one of claims 8 to 9, comprising controlling (610) an air pressure at the cathode of the fuel cell stack as the target coolant inlet temperature is controlled.

11. The method of any one of claims 8 to 10, wherein controlling the oxygen partial pressure of the air flow comprises controlling at least one flow control valve and a cathode recirculation pump fluidly connected to a cathode recirculation passage that fluidly connects the cathode outlet line to the cathode inlet line to thereby divert the cathode exhaust flow to the cathode inlet line such that the cathode exhaust flow is mixed with the air flow, wherein the at least one flow control valve and the cathode recirculation pump are controlled in dependance on the value of the power output; and/or
wherein the obtained value of the power output is a predicted value of the power output of the fuel cell system.

12. A control system (30) for controlling a fuel cell system (20) of a fuel cell vehicle (10), the control system (30) comprising processing circuitry (32) configured to perform the method of any one of claims 8 to 11.

13. A fuel cell vehicle (10) comprising the control system (30) of claim 12.

14. A computer program product comprising comprises computer-executable instructions, which, when executed by processing circuitry, cause the processing circuitry to perform the method of any one of claims 8 to 11.

15. A computer-readable storage medium, having stored thereon a computer program product comprising comprises computer-executable instructions which, when executed by processing circuitry, cause the processing circuitry to perform the method of any one of claims 8 to 11.
